# EUROPEAN PATENT APPLICATION

(11) **EP 4 203 483 A1**
(43) Date of publication of application: **28.06.2023**
(21) Application number: 21881619.7
(22) Date of filing: 23.07.2021
(51) Int. Cl.: H04N 21/422, H04N 21/431, H04N 21/472, H04N 21/485, H04N 21/488

(54) **VIDEO PROCESSING METHOD AND APPARATUS, ELECTRONIC DEVICE, AND COMPUTER-READABLE STORAGE MEDIUM**

(30) Priority: 23.10.2020 CN 202011149980
(71) Applicant: BEIJING BYTEDANCE NETWORK TECHNOLOGY CO., LTD., Beijing 100041 (CN)
(72) Inventor: HAN, Song, Beijing 100190 (CN); LIU, Chang, Beijing 100190 (CN); LIU, Shun, Beijing 100190 (CN); LIU, Ji, Beijing 100190 (CN)
(74) Representative: Dentons UK and Middle East LLP
(86) International application number: PCT/CN2021/108085
(87) International publication number: WO 2022/083199

(57) **Abstract**

Embodiments of the present disclosure disclose a video processing method, apparatus, electronic device, and storage medium. According to the present disclosure, by playing a video, in the case where the video is played to a preset progress, suspending playing the video, and displaying interactive operation guidance information, under the guidance of the interactive operation guidance information, a user watching the video possibly will perform an interactive operation corresponding to the interactive operation guidance information. If the interactive operation of the user is detected within a preset time, a pop-up window is displayed which can comprise a target object. A target page which comprises relevant information of the target object can be displayed according to an operation of the user on the pop-up window.

## Description

### CROSS-REFERENCE TO RELATED APPLICATIONS

This application is based on and claims the priority to the Chinese patent application No. 202011149980.3 filed on October 23, 2020, the disclosure of which is hereby incorporated by reference in its entirety into the present application.

### TECHNICAL FIELD

The present disclosure relates to the field of information technologies, and particularly, to a video processing method, apparatus, electronic device, computer-readable storage medium, computer program, and computer program product.

### BACKGROUND

With the continuous development of intelligent terminals, various types of applications (APPs) can be installed by users in the intelligent terminals.

For example, an application installed in an intelligent terminal can be used for playing various types of videos. In addition, the application installed in the intelligent terminal is not limited to playing videos, and for example, it can also have other functions, for example, an instant messaging function, a payment function, etc.

In the related art, in a process of playing a video, the intelligent terminal plays the video from its start frame to its end frame.

### SUMMARY

In order to solve or at least partially solve the above technical problem, embodiments of the present disclosure provide a video processing method, apparatus, electronic device, and storage medium, so that a user can, in a process of watching a video, interact with a playing device of the video, and in a process of interaction, the user can know other information related to the video, for example, relevant information of a target object, thereby improving user experience.

According to some embodiments of the present disclosure, there is provided a video processing method comprising: playing a video; suspending playing the video in the case where the video is played to a preset progress; displaying interactive operation guidance information; displaying a pop-up window if an interactive operation of a first user is detected within a preset time, wherein the pop-up window comprises a target object; and displaying a target page according to a first operation of the first user on the pop-up window, wherein the target page comprises relevant information of the target object.

According to some embodiments of the present disclosure, there is also provided a video processing method comprising: receiving configuration information transmitted by a first terminal, wherein the configuration information comprises information of configuring a video, a preset progress, interactive operation guidance information, a pop-up window and a target page by a second user; and transmitting the video, the preset progress, the interactive operation guidance information, the pop-up window and the target page to a second terminal according to the configuration information.

According to some embodiments of the present disclosure, there is also provided a video processing apparatus comprising: a player configured to play a video; a controller configured to suspend playing the video in the case where the video is played to a preset progress; a display configured to display interactive operation guidance information; and a processor configured to detect an interactive operation of a first user within a preset time; the display being further configured to: display a pop-up window when the processor detects the interactive operation of the first user within the preset time, wherein the pop-up window comprises a target object; and display a target page according to a first operation of the first user on the pop-up window, wherein the target page comprises relevant information of the target object.

According to some embodiments of some embodiments of the present disclosure, there is also provided a video processing apparatus comprising: a receiver configured to receive configuration information transmitted by a first terminal, wherein the configuration information comprises information of configuring a video, a preset progress, interactive operation guidance information, a pop-up window and a target page by a second user; and a transmitter configured to transmit the video, the preset progress, the interactive operation guidance information, the pop-up window and the target page to a second terminal according to the configuration information.

According to some embodiments of the present disclosure, there is also provided an electronic device comprising: one or more processors; and a memory for storing one or more programs; the one or more programs, when executed by the one or more processors, causing the one or more processors to implement the video processing method according to any of the above embodiments.

According to some embodiments of the present disclosure, there is also provided a computer-readable storage medium having thereon stored a computer program which when executed by a processor, implements the video processing method according to any of the above embodiments.

According to some embodiments of the present disclosure, there is also provided a computer program comprising: instructions which when executed by a processor, cause the processor to execute the video processing method according to any of the above embodiments.

According to some embodiments of the present disclosure, there is also provided a computer program product comprising instructions which when executed by a processor, cause the processor to execute the video processing method according to any of the above embodiments.

Compared with the prior art, the technical solution provided by the embodiments of the present disclosure has at least the following advantage: according to the video processing method provided by the embodiments of the present disclosure, playing the video; in the case where the video is played to a preset progress, suspending playing the video, and displaying the interactive operation guidance information; under the guidance of the interactive operation guidance information, the user watching the video possibly will perform a corresponding interactive operation; if the interactive operation of the user is detected within the preset time, a pop-up window is displayed, wherein the pop-up window can comprise the target object; further, a target page which comprises relevant information of the target object can be displayed according to the operation of the user on the pop-up window; so that the user is enabled to, in the process of watching the video, interact with the playing device of the video, and in the process of interaction, know other information related to the video, for example, relevant information of the target object, thereby improving the user experience.

### BRIEF DESCRIPTION OF THE DRAWINGS

The accompanying drawings described herein are used for providing a further understanding of the present disclosure and constitute a part of this application. Illustrative embodiments of the present disclosure, together with their description, serve to explain the present disclosure but not to limit the present disclosure improperly. In the drawings:
the above and other features, advantages, and aspects of the embodiments of the present disclosure will become more apparent with reference to the following specific implementations when described in conjunction with the accompanying drawings. Throughout the drawings, identical or similar reference numerals refer to identical or similar elements. It should be understood that the drawings are schematic and that components and elements are not necessarily drawn to scale.
Fig. 1 is a flowchart of a video processing method according to an embodiment of the present disclosure;
Fig. 2 is a schematic diagram of an application scenario according to an embodiment of the present disclosure;
Fig. 3 is a schematic diagram of a user interface according to an embodiment of the present disclosure;
Fig. 4 is a schematic diagram of another user interface according to an embodiment of the present disclosure;
Fig. 5 is a schematic diagram of another user interface according to an embodiment of the present disclosure;
Fig. 6 is a schematic diagram of yet another user interface according to an embodiment of the present disclosure;
Fig. 7 is a flowchart of another video processing method according to an embodiment of the present disclosure;
Fig. 8 is a flowchart of another video processing method according to an embodiment of the present disclosure;
Fig. 9 is a flowchart of yet another video processing method according to an embodiment of the present disclosure;
Fig. 10 is a schematic diagram of another application scenario according to an embodiment of the present disclosure;
Fig. 11 is a schematic diagram of yet another user interface according to an embodiment of the present disclosure;
Fig. 12 is a schematic diagram of another user interface according to an embodiment of the present disclosure;
Fig. 13 is a schematic structural diagram of a video processing apparatus according to an embodiment of the present disclosure;
Fig. 14 is a schematic structural diagram of another video processing apparatus according to an embodiment of the present disclosure; and
Fig. 15 is a schematic structural diagram of an electronic device according to an embodiment of the present disclosure.

### DETAILED DESCRIPTION

Embodiments of the present disclosure will be described in more detail below with reference to the accompanying drawings. While certain embodiments of the present disclosure are shown in the drawings, it should be understood that the present disclosure can be implemented in various forms and should not be construed as limited to the embodiments set forth herein, and conversely, these embodiments are provided for a more complete and thorough understanding of the present disclosure. It should be understood that the drawings and the embodiments of the present disclosure are for exemplary purposes only and are not intended to limit the scope of the present disclosure.

It should be understood that the various steps recited in method implementations of the present disclosure can be performed in a different order, and/or in parallel. Moreover, the method implementations can comprise additional steps and/or omit performing the shown steps. The scope of the present disclosure is not limited in this respect.

A term "comprising" and its variants as used herein is intended to be open-minded, i.e., "comprising but not limited to" . A term "based on" is " at least partially based on". A term "one embodiment" means "at least one embodiment"; a term "another embodiment" means "at least one other embodiment"; a term "some embodiments" means "at least some embodiments". Relevant definitions for other terms will be given in the following description.

It should be noted that concepts such as "first" and "second" mentioned in the present disclosure are only used for distinguishing different apparatuses, modules or units, and are not used for limiting the order or interdependence of functions performed by the apparatuses, modules or units.

It should be noted that modifiers "a", "a plurality of" mentioned in this disclosure are intended to be illustrative rather than restrictive, and those skilled in the art would appreciate that they should be understood as "one or more" unless otherwise clearly indicated in the context.

Names of messages or information interacted between a plurality of apparatuses in the implementations of the present disclosure are for illustration purposes only, and are not intended to limit the scope of the messages or information.

As mentioned above, the manner in which a video is played from its start frame to its end frame lacks interaction with the user, thereby reducing the user experience. In view of the above technical problem, technical solutions of the present disclosure can be realized by employing the following embodiments.

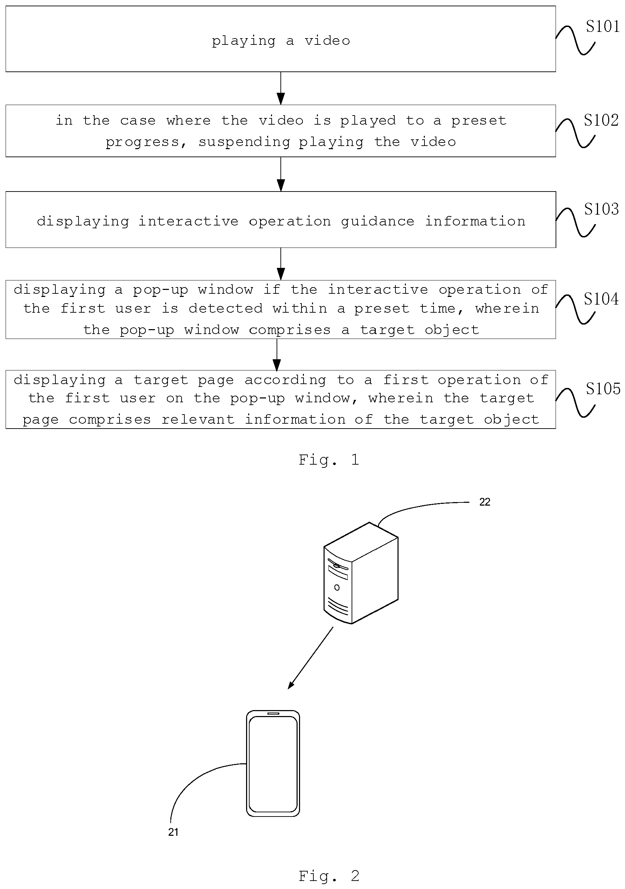

Fig. 1 is a flowchart of a video processing method according to an embodiment of the present disclosure. The embodiment is applicable to a case where video processing is performed in a client, and the method can be performed by a video processing apparatus which can be implemented in software and/or hardware and can be provided in an electronic device, such as a mobile terminal comprising a mobile phone, a computer or a tablet computer, a wearable device, a smart home device, and the like. Alternatively, the embodiment can be applicable to a case where video processing is performed in a server, and the method can be performed by an video processing apparatus which can be implemented in software and/or hardware and can be provided in an electronic device, such as a server.

As shown in Fig. 1, the method can comprise S101, playing a video.

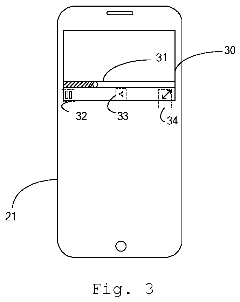

As shown in Fig. 2, a terminal 21 can have therein installed various applications, and a server 22 corresponding to an application can transmit a video to the terminal 21. The terminal 21 can play the video after receiving the video. Alternatively, the terminal 21 can have locally cached a video, and plays the video according to a playing operation of a user on the local video. As shown in Fig. 3, the terminal 21 comprises a video player 30 configured to play the video. The video player 30 can be a video player provided by the application.

As shown in Fig. 3, the video player 30 can comprise a video play progress display bar 31, a play control button 32, a video volume control button 33, and a full-screen control button 34. It can be understood that the video player shown in Fig. 3 is only an illustrative example and is not specifically limited. The terminal 21 can play the video in full screen according to an operation of the user on the full-screen control button 34. The operation of the user on the full-screen control button 34 is not limited herein, and can be, for example, a single click, double click, long press, etc.

In one embodiment, in the process of playing the video by the video player 30, the video processing apparatus in a background of the terminal 21 can acquire the play progress of the video in real time.

S102, in the case where the video is played to a preset progress, suspend playing the video.

Typically, one video consists of a plurality of frames of images that are played sequentially at a certain frequency. In addition, there is a certain duration when one video is played from its start frame and its end frame, the certain duration can be used as a total duration of the video, and the play progress of the video can be a ratio of a duration of its played part to the total duration of the video.

In this embodiment, in the case where the play progress of the video is the preset progress, the video processing apparatus can control the video player 30 to suspend playing the video. Optionally, the preset progress can be a progress except first m seconds and last n seconds of the video. Specific values of m and n are not limited herein, and for example, m =3 and n = 5. For example, the total duration of the video currently played by the video player 30 is 72 seconds, and in the case where the play progress of the video is greater than or equal to 4 seconds and less than or equal to 67 seconds, the video processing apparatus can control the video player 30 to suspend playing the video.

S103, display interactive operation guidance information.

In the case where the video player 30 suspends playing the video, the video processing apparatus can display the interactive operation guidance information in a user interface of the terminal 21. The interactive operation guidance information is used for guiding the user of the terminal 21 to perform an interactive operation or interaction operation in the user interface. In the embodiment, the user of the terminal 21 can be marked as a first user, and the first user can be a user who watches the video.

S104, display a pop-up window if the interactive operation of the first user is detected within a preset time, wherein the pop-up window comprises a target object.

It can be understood that, in the case where the interactive operation guidance information is displayed in the user interface of the terminal 21, the first user may or may not perform the corresponding interactive operation or mutilation operation according to the guidance of the interactive operation guidance information.

For example, the preset time can comprise a time or duration of displaying the interactive operation guidance information in the user interface, and/or further comprise another time or duration set according to actual needs.

For example, after the interactive operation guidance information is displayed in the user interface, a specific time or duration is added, so that the user makes a decision of the interactive operation. The video processing apparatus can detect whether the first user performs the corresponding interactive operation or mutilation operation in the user interface within the preset time; and if the video processing apparatus detects the interactive operation or mutilation operation of the first user within the preset time, the pop-up window is displayed in the user interface, wherein the pop-up window comprises the target object.

In one feasible implementation, the interactive operation comprises a clicking operation.

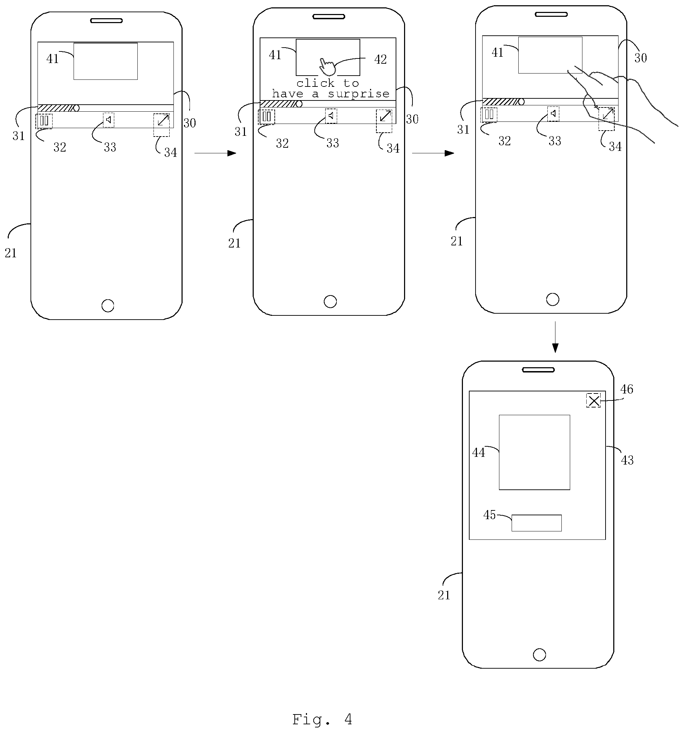

For example, as shown in Fig. 4, in the process of playing the video by the video player 30, the video processing apparatus acquires the play progress of the video in real time. In the case where the play progress is the preset progress, the video processing apparatus controls the video player 30 to suspend playing the video. At this time, the video player 30 displays one frame of image corresponding to the play progress, for example, the image comprises an object 41.

In the case where the video player 30 suspends playing the video, the video processing apparatus can display the interactive operation guidance information in the user interface of the terminal 21. It can be understood that the video processing apparatus can display the interactive operation guidance information while suspending playing the video, or the video processing apparatus can further display the interactive operation guidance information after suspending playing the video.

In some embodiments, the interactive operation guidance information comprises a dynamic icon, a static icon, or text information, for guiding the first user to perform the interactive operation.

The interactive operation guidance information comprises an icon 42 as shown in Fig. 4, and the icon 42 can be a static icon or a dynamic icon. In the case where it is the dynamic icon, the icon 42 can present a click gesture of a dynamic effect, and the click gesture of the dynamic effect can be repeated several times, each for a duration of several seconds. For example, the click gesture of the dynamic effect can be repeated 3 times, each for a duration of 2 seconds.

In addition, the interactive operation guidance information can further comprise text information such as "click to have a surprise". Under the guidance of the icon 42 and the text information, the first user can click the user interface. For example, within the preset time of displaying the icon 42 and the text information, the video processing apparatus detects the clicking operation of the first user in the user interface, and further displays the pop-up window 43. The pop-up window 43 can have therein displayed an object 44. The object 41 and the object 44 herein can or cannot be related. The object 44 herein can be marked as the target object.

In addition, if the interactive operation of the first user is not detected within the preset time, playing the video is continued.

For example, the first user may not be affected by the icon 42 and the text information under the guidance of the icon 42 and the text information. For example, the first user may not perform any operation on the user interface, and in this case, if the video processing apparatus does not detect the interactive operation of the first user within the preset time of displaying the icon 42 and the text information, playing the video is continued, that is, playing the video is continued from the suspended position.

S105, displaying a target page according to a first operation of the first user on the pop-up window, wherein the target page comprises relevant information of the target object.

As shown in Fig. 4, a button 45 can also be comprised in the pop-up window 43. The video processing apparatus can skip to the target page according to an operation of the first user on the button 45, or according to an operation of the first user on an area except a close icon 46 in the pop-up window 43.

For example, skipping to the target page can refer to skipping from displaying the pop-up window 43 to displaying the target page. The target page can comprise the relevant information of the target object. For example, taking an advertisement video as an example, the target page can be a detail page or a purchase page of the target object. The detail page herein can display some descriptive information of the target object, such as its volume, size, price, picture, function, etc. In some embodiments, some descriptive information of the target object can also be displayed in the purchase page.

In addition, the embodiment does not limit the specific operation of the first user on the button 45 or the specific operation of the first user on the area except the close icon 46 in the pop-up window 43, which can be, for example, a click, a double click, a long press, voice recognition, gesture recognition, expression recognition, etc.

It can be understood that the operation of the first user, which can trigger the terminal 21 to skip from the pop-up window 43 to the target page, is not limited to the operation on the button 45, or the operation on the area except the close icon 46 in the pop-up window 43, and can also be, for example, other operations. The operation of the first user, which triggers the terminal 21 to skip from the pop-up window 43 to the target page, can be marked as the first operation in the embodiment.

It can be understood that the steps S101 to S105 as described above can also be performed again when the video is replayed after it is played. In addition, the steps S101 to S105 can be performed one or more times in the process of playing the complete video once. That is, suspending the playing and displaying the interactive operation guidance information can be separately performed in a plurality of different preset progresses.

According to the video processing method provided by the embodiment of the present disclosure, by playing the video, in the case where the video is played to the preset progress, suspending playing the video, and displaying the interactive operation guidance information, under the guidance of the interactive operation guidance information, the user watching the video possibly will perform the corresponding interactive operation.

If the interactive operation of the user is detected within the preset time, a pop-up window is displayed which can comprise a target object. Further, the target page which comprises the relevant information of the target object can be displayed according to the operation of the user on the pop-up window, so that the user is enabled to interact with the playing device of the video in the process of watching the video. In the process of interaction, the user can know other information related to the video, for example, the relevant information of the target object, thereby improving the user experience.

On the basis of the above embodiment, the video comprises an advertisement video, the target object is an advertisement product, and the target page is used for displaying relevant information of the advertisement product.

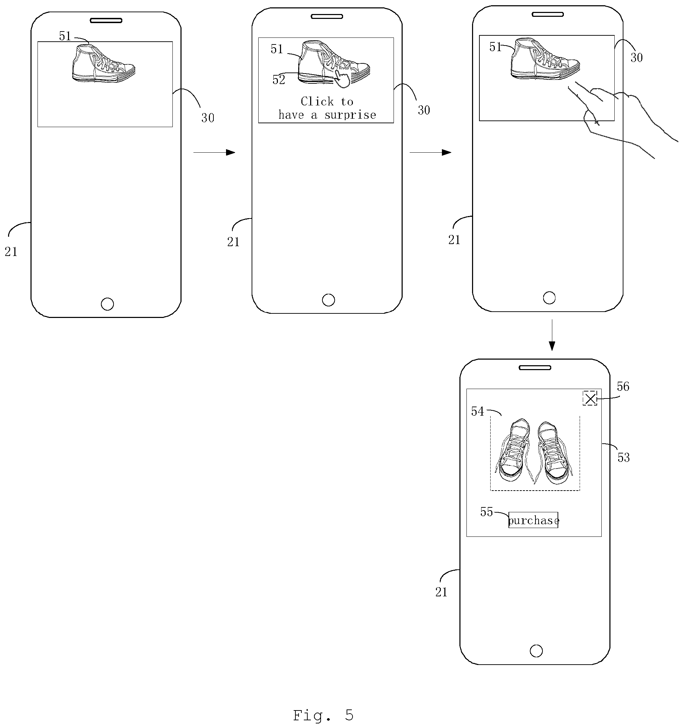

The following description, taking an advertisement video as an example, will be made in conjunction with Fig. 5. As shown in Fig. 5, the video played by the video player 30 comprises an advertisement video, which can be an advertisement video about, for example, shoes.

In the process of playing the advertisement video by the video player 30, the video processing apparatus acquires the play progress of the advertisement video in real time. In the case where the play progress is the preset progress, i.e., the video is played to the preset progress, the video processing apparatus controls the video player 30 to suspend playing the advertisement video. At this time, the video player 30 displays a frame of image corresponding to the play progress, for example, the image comprises shoes 51.

In addition, in the case where the video player 30 suspends playing the advertisement video, the video processing apparatus can display the interactive operation guidance information in the user interface of the terminal 21. The interactive operation guidance information comprises an icon 52 as shown in Fig. 5 and text information "click to have a surprise".

Under the guidance of the icon 52 and the text information, the user of the terminal 21, i.e. the first user, can click the user interface. For example, within the preset time of displaying the icon 52 and the text information, the video processing apparatus detects the clicking operation of the first user in the user interface, and further displays the pop-up window 53. The pop-up window 53 has therein displayed shoes 54, a purchase button 55, and a close button 56. The shoes 54 herein can be an advertisement product. The shoes 54 and the shoes 51 can be the same style of shoes, or different styles of shoes.

When the first user clicks the purchase button 55 or clicks an area except the close button 56 in the pop-up window 53, the video processing apparatus can skip from the pop-up window 53 to the target page according to the clicking operation of the first user. The target page is used for displaying relevant information of the shoes 54, i.e., the target page is a page associated with the target object shoes 54, e.g., the target page can be a purchase page of the shoes 54.

According to the video processing method provided by the embodiment of the present disclosure, by playing the video, in the case where the video is played to the preset progress, suspending playing the advertisement video, and displaying the interactive operation guidance information, under the guidance of the interactive operation guidance information, the user watching the advertisement video possibly will perform the corresponding interactive operation.

If the interactive operation of the user is detected within the preset time, a pop-up window is displayed which can comprise the advertisement product, and further, the target page related to the advertisement product, such as the purchase page, can be displayed according to the operation of the user on the pop-up window, so that the user is enabled to interact with the playing device of the advertisement video in the process of watching the advertisement video. In the process of interaction, the user can purchase the advertisement product, thereby improving the user experience.

It should be understood by those skilled in the art that the videos described in the embodiment of the present disclosure are not limited to advertisement videos, and can also comprise other various types of videos, and for the other various types of videos, the interaction with the user can also be realized through the video processing method provided in the embodiment of the present disclosure.

On the basis of the above embodiments, the method further comprises: closing the pop-up window according to a second operation of the first user on the pop-up window or a third operation of the first user on an area outside the pop-up window; and continuing playing the video.

As shown in Fig. 4 or 5, in the case where the terminal 21 displays the pop-up window 43 or the pop-up window 53, the terminal 21 can control the pop-up window to be closed according to a second operation of the first user on the close icon 46 or 56, and continue playing the suspended video after closing the pop-up window. Alternatively, the terminal 21 can also control the pop-up window to be closed according to a third operation of the first user on the area outside the pop-up window 43 or 53. The second operation and the third operation are not specifically limited herein, and they can be, for example, a click, a double click, etc.

The video processing method provided by the embodiment of the present disclosure controls the pop-up window to be closed according to a closing operation of the first user on the pop-up window, and continues playing the suspended video, so that the user watching the video is enabled to continue watching the video by closing the pop-up window in the case where the pop-up window appears, which prevents the pop-up window from affecting the user to continue watching the video and further improves the user experience.

Optionally, the displaying a pop-up window if the interactive operation of the first user is detected within a preset time comprises: displaying the pop-up window if the interactive operation of the first user inside a preset area is detected within the preset time.

As shown in Fig. 4 or 5, in the case where the terminal 21 displays the icon 42 or 52 and the text information "click to have a surprise", if the terminal 21 detects the interactive operation of the first user, such as the clicking operation, within the preset time (for example, the preset time of displaying the icon 42 or 52 and the text information), the terminal 21 can further detect whether the interactive operation is inside a preset area of the user interface. In the case where the terminal 21 determines that the interactive operation is inside the preset area, the pop-up window 43 or 53 is displayed.

The preset area is not limited in this embodiment, for example, the preset area can be a preset area around the icon 42 or 52, or another preset area in the user interface. The preset area around the icon 52 herein can be an area centered at a certain point, for example, a central point, on the icon 52.

In addition, when the terminal 21 detects the interactive operation of the first user inside the preset area, the terminal 21 can also perform vibration feedback and display the pop-up window.

Optionally, the method further comprises: continuing playing the video if the interactive operation of the first user outside the preset area is detected within the preset time.

For example, if the terminal 21 detects the interactive operation of the first user, such as the clicking operation, within the preset time of displaying the icon 42 or 52 and the text information, the terminal 21 can further detect whether the interactive operation is inside the preset area of the user interface, and if the interactive operation is not inside the preset area but outside the preset area, the playing of the suspended video is continued, i.e., the playing of the previously suspended video is resumed.

According to the video processing method provided by the embodiment of the present disclosure, by displaying a pop-up window when the interactive operation of the first user inside the preset area is detected within the preset time; and continuing playing the video when the interactive operation of the first user outside the preset area within the preset time is detected, it can prevent the appearance of the pop-up window caused by the user's misoperation outside the preset area from affecting the first user to watch the video, and further improves the user experience.

In another feasible implementation, the interactive operation comprises a sliding operation.

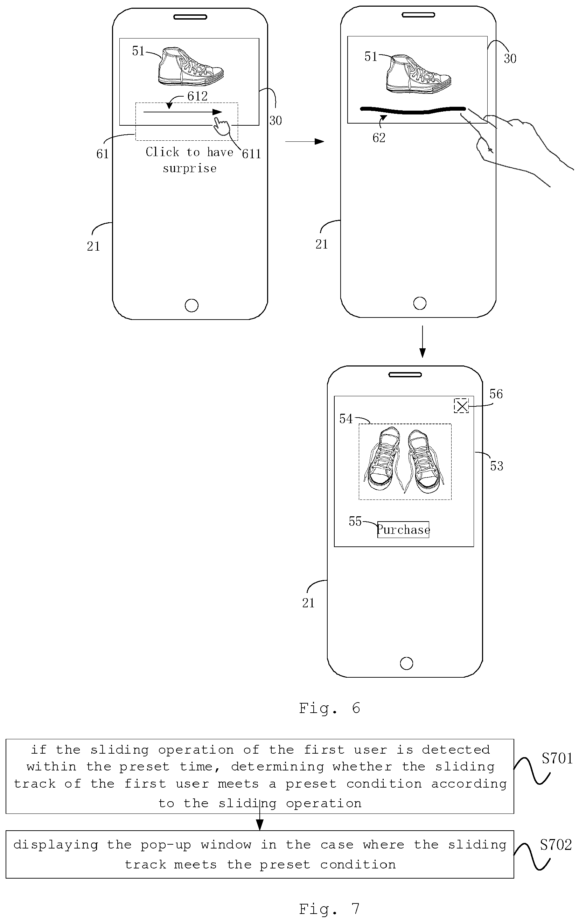

For example, the interactive operation guidance information displayed by the terminal 21 can comprise an icon 61 as shown in Fig. 6, wherein the icon 61 can be a static icon or a dynamic icon. In the case where it is a dynamic icon, a gesture icon 611 in the icon 61 can move from the left to the right of a screen of the terminal 21. And in the process of the gesture icon 611 moving from the left to the right, a preset track 612 can gradually be lengthened from the left to the right of the screen.

That is, the icon 61 can present a slide gesture of a dynamic effect, and thus, guides the first user to perform a sliding operation on the user interface. Optionally, the slide gesture of the dynamic effect can be repeated several times, each for a duration of several seconds. For example, the slide gesture of the dynamic effect can be repeated 3 times, each for a duration of 3 seconds. In addition, the interactive operation guidance information can further comprise text information, for example, "slide to have a surprise".

For example, under the guidance of the icon 61 and the text information, the first user may perform the sliding operation in the user interface, and as shown in Fig. 6, 62 shows a sliding track of the sliding operation of the first user in the user interface.

Optionally, the displaying a pop-up window if the interactive operation of the first user is detected within a preset time comprises the following steps as shown in Fig. 7.

S701, if the sliding operation of the first user is detected within the preset time, determining whether the sliding track of the first user meets a preset condition according to the sliding operation.

For example, the terminal 21 detects the sliding operation of the first user within a preset time of displaying the icon 61 and the text information, and can further determine whether the sliding track of the first user in the user interface meets a preset condition.

S702, displaying the pop-up window in the case where the sliding track meets the preset condition.

For example, in the case where the sliding track of the first user meets the preset condition, the terminal 21 displays the pop-up window, such as the pop-up window 53 shown in Fig. 6; and the operation of the first user on the pop-up window 53 and the response of the terminal 21 to the operation can refer to the contents described in the above embodiments, and are not repeated herein. In the case where the sliding track of the first user does not meet the preset condition, the terminal 21 can continue playing the suspended video.

In one feasible implementation, the preset condition comprises: the sliding track being inside a preset area of the user interface. For example, the preset area can be a preset area around the icon 61, or another preset area in the user interface. That is, when the terminal 21 detects the sliding operation of the first user within the preset time of displaying the icon 61 and the text information, and the sliding track of the first user is inside the preset area of the user interface, the terminal 21 can display the pop-up window.

In another feasible implementation, the preset condition comprises: a similarity between the sliding track and a preset track shown by the interactive operation guidance information being greater than or equal to a preset similarity.

For example, when the terminal 21 detects the sliding operation of the first user within the preset time of displaying the icon 61 and the text information, the terminal 21 can further determine the similarity between the sliding track 62 of the first user and the preset track 612 shown by the interactive operation guidance information; and in the case where the similarity is greater than or equal to the preset similarity, the terminal 21 can display the pop-up window.

It can be understood that, in some embodiments, the terminal 21 can further display the pop-up window in the case where the sliding track is inside the preset area of the user interface, and the similarity between the sliding track and the preset track shown by the interactive operation guidance information is greater than or equal to the preset similarity.

In another feasible implementation, the preset condition comprises at least one of: a length of the sliding track being greater than or equal to a preset length; an angle of the sliding track being within a preset angle range.

For example, when the terminal 21 detects the sliding operation of the first user within the preset time of displaying the icon 61 and the text information, the terminal 21 can further determine whether the length of the sliding track 62 of the first user is greater than or equal to the preset length, and/or judge whether the angle of the sliding track 62 is within the preset angle range; and in the case where the length of the sliding track 62 is greater than or equal to the preset length and/or the angle of the sliding track 62 is within the preset angle range, the terminal 21 can display the pop-up window.

The length of the sliding track 62 herein can be in units of pixels (pt). In the case where the sliding track 62 is a straight line, the length of the sliding track 62 can be the number of pixels corresponding to the straight line. In the case where the sliding track 62 is a curve, the length of the sliding track 62 can be the number of pixels corresponding to the curve, which can be calculated by integration.

Optionally, the preset length can be 125 pixels. The preset angle range can be 30 degrees to 150 degrees, and/or 210 degrees to 330 degrees. That is, when the terminal 21 detects the sliding operation of the first user within the preset time of displaying the icon 61 and the text information, and the length of the sliding track of the first user is greater than or equal to 125 pixels and the angle of this sliding track is between 30 degrees and 150 degrees or between 210 degrees and 330 degrees, the terminal 21 can display the pop-up window.

It can be understood that in some embodiments, the terminal 21 can also display the pop-up window in the case where at least two of the following conditions are met at the same time: 1) the sliding track being inside the preset area of the user interface; 2) the similarity between the sliding track and the preset track shown by the interactive operation guidance information being greater than or equal to the preset similarity; and 3) the length of the sliding track being larger than or equal to the preset length, and/or the angle of the sliding track being within the preset angle range.

Optionally, the angle of the sliding track is an angle between a line connecting a start point and an end point of the sliding track and a horizontal direction or a vertical direction.

For example, in the case where the sliding track 62 is a straight line, an angle of the sliding track 62 can be an angle between a line connecting a start point and an end point of the sliding track 62 and a horizontal direction or a vertical direction. Alternatively, the angle of the sliding track is an angle between a tangent of the start point of the sliding track and the horizontal direction or the vertical direction.

For example, in the case where the sliding track 62 is a curve, the angle of the sliding track 62 can be an angle between a tangent of a certain point, such as a start point, on the sliding track 62, and the horizontal direction or the vertical direction.

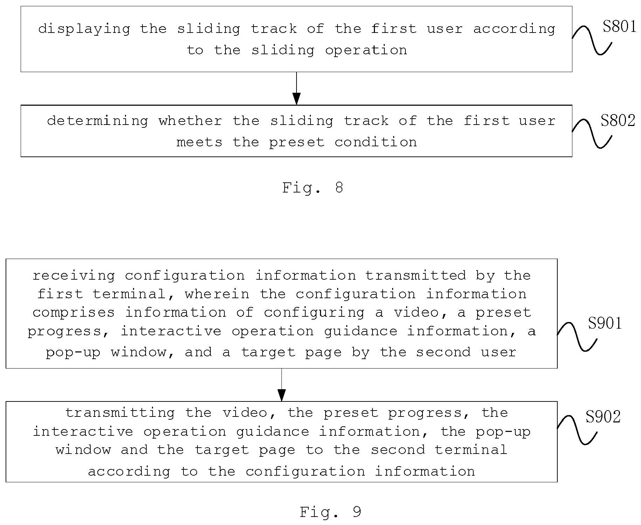

Optionally, the determining whether the sliding track of the first user meets a preset condition according to the sliding operation comprises the following steps as shown in Fig. 8.

S801, displaying the sliding track of the first user according to the sliding operation.

For example, the terminal 21 detects the sliding operation of the first user within the preset time of displaying the icon 61 and the text information, can further display the sliding track 62 of the first user in the user interface, and can distinguish the sliding track 62 from the preset track 612 in some conventional ways. For example, the sliding track 62 is a relatively thick line and the preset track 612 is a relatively thin line. Alternatively, the sliding track 62 can be a solid line, and the preset track 612 can be a dotted line.

S802, determining whether the sliding track of the first user meets the preset condition.

Further, the terminal 21 determines whether the sliding track 62 meets the preset condition.

According to the video processing method provided by the embodiment of the present disclosure, by detecting the sliding operation of the first user within the preset time and determining whether the sliding track of the first user meets the preset condition according to the sliding operation, in the case where the sliding track meets the preset condition, the pop-up window is displayed, so that the first user is enabled to trigger the pop-up window through a variety of interactive operations, which improves the flexibility of triggering the pop-up window display.

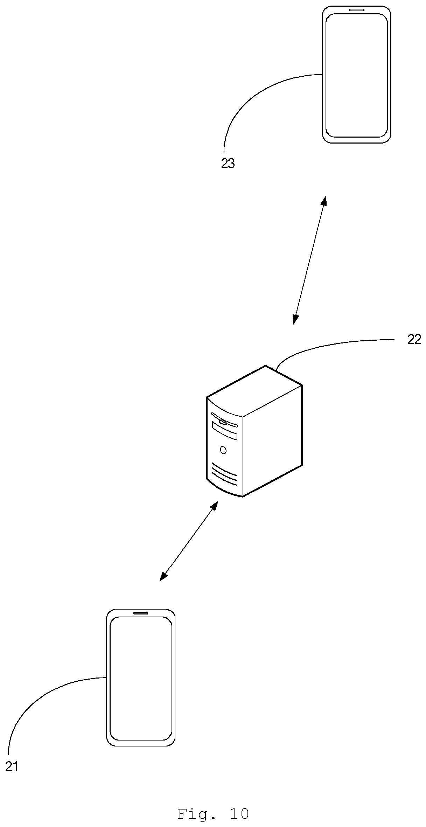

Fig. 9 is a flowchart of another video processing method according to an embodiment of the present disclosure. As shown in Fig. 9, the method of the present embodiment is applied in a server, and can be adaptable to an application scenario as shown in Fig. 10. In this application scenario, the server 22 can communicate not only with the terminal 21 but also with a terminal 23.

In this embodiment, the terminal 23 can be marked as a first terminal, the terminal 21 can be marked as a second terminal, a user of the terminal 21 can be marked as a first user, and a user of the terminal 23 can be marked as a second user. The first user herein can be the user watching the video as described above. The second user can be an creator of the video.

The creator can configure a video, a preset progress of suspending the video, interactive operation guidance information, a pop-up window, a target page or a link of the target page; and further, the creator can send corresponding configuration information to the server 22 through the terminal 23, the server 22 pushes the video of the creator to the terminal 21, and in the process of playing the video by the terminal 21, the terminal 21 can execute the method described in the above embodiment, and the specific process is not repeated herein.

In this embodiment, taking the server 22 as an execution body, a method executed by the server 22 will be discussed, and as shown in Fig. 9, the method comprises S901, receiving configuration information transmitted by the first terminal, wherein the configuration information comprises information of configuring a video, a preset progress, interactive operation guidance information, a pop-up window, and a target page by the second user.

For example, it can be learned in conjunction with Fig. 10 that, the server 22 can receive configuration information transmitted by the terminal 23, wherein the configuration information comprises information of configuring a video, a preset progress of suspending the video, interactive guidance information, a pop-up window, a target page, or a link of the target page by the second user, for example, the creator.

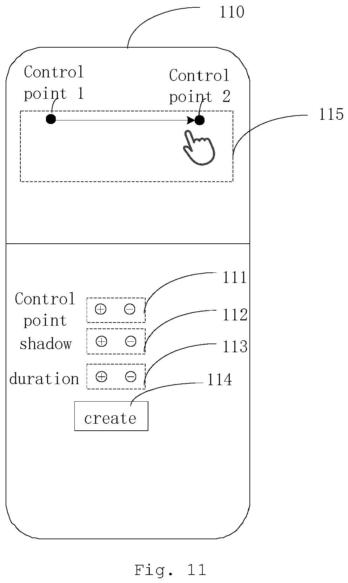

Next, taking the interactive operation guidance information as an example, a process of configuring the interactive operation guidance information by the second user will be discussed. For example, when the second user logs on to the server 22 through the terminal 23, a user interface of the terminal 23 can display a configuration page. The configuration page is shown in Fig. 11, and the configuration page 110 can be used for configuring the interactive operation guidance information, which can be the icon 61 as shown in Fig. 6.

For example, the configuration page 110 comprises a configuration icon 111 of a control point, a configuration icon 112 of a preset track shadow, and a configuration icon 113 of a duration of displaying the gesture icon 611 and the preset track 612. The control point herein is used for determining a length and/or shape of the preset track. For example, two control points, 1 and 2, can determine a straight-line preset track, and a distance between the control points 1 and 2 can determine a length of the preset track.

In addition, after the second user completes configuring the control point, the preset track shadow, the duration of displaying the gesture icon 611 and the preset track 612 sequentially through the configuration icon 111, the configuration icon 112, and the configuration icon 113, a create button 114 can be clicked, and further the server 22 or the terminal 23 can create the interactive operation guidance information 115 as shown in Fig. 11.

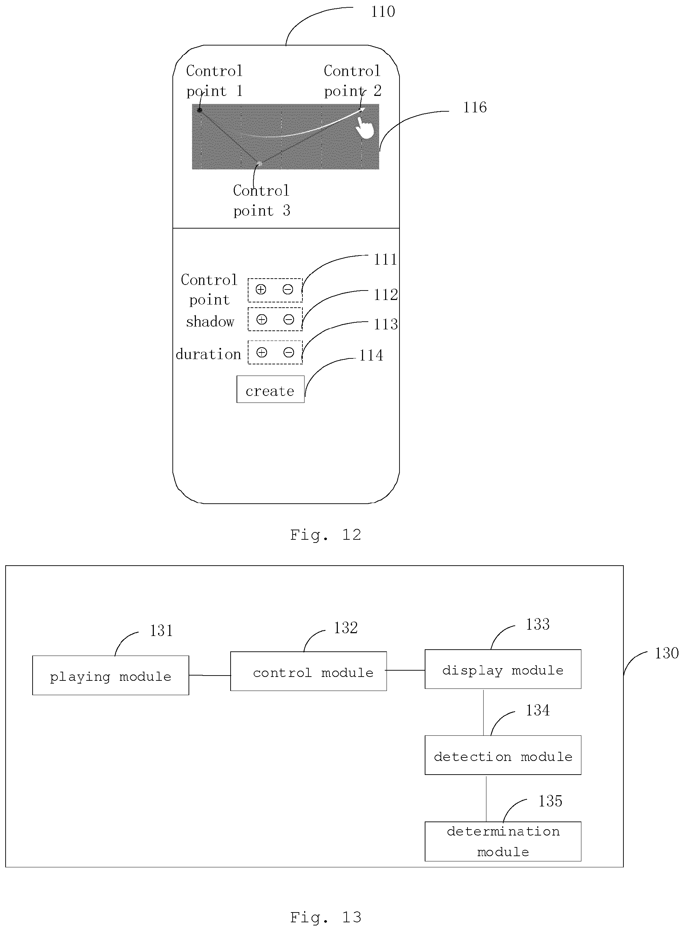

In other embodiments, the second user can also configure a curve preset track through the configuration page 110. For example, the second user can add a control point 3 on the basis of the control points 1 and 2, and a relative position relation of the control points 1, 2 and 3, is shown in Fig. 12, thereby creating the interactive operation guidance information 116 as shown in Fig. 12.

S902, transmit the video, the preset progress, the interactive operation guidance information, the pop-up window and the target page to the second terminal according to the configuration information.

For example, the server 22 can transmit, according to the configuration information of the terminal 23, to the terminal 21, the video, the preset progress of suspending the video, the interactive guidance information, the pop-up window, the target page or the link of the target page, etc., which are configured by the creator.

The second terminal is used for playing the video, and in the case where the video is played to the preset progress, the second terminal is used for suspending playing the video and displaying the interactive operation guidance information; if the second terminal detects the interactive operation of the first user within preset time, it displays the pop-up window, wherein the pop-up window comprises the target object; and the second terminal is further used for displaying the target page according to the first operation of the first user on the pop-up window, wherein the target page comprises the relevant information of the target object.

For example, in the process of playing the video by the terminal 21, the terminal 21 can perform the method described in the above embodiment, and the specific process is not repeated herein.

According to the video processing method provided by the embodiment of the present disclosure, the configuration information transmitted by the first terminal is received through the server, and the configuration information can be information of configuring the video, the preset progress of suspending the video, the interactive operation guidance information, the pop-up window, the target page, or the link of the target page by the second user corresponding to the first terminal.

Further, the server transmits, according to the configuration information, to the second terminal, the video, the preset progress of suspending the video, the interactive operation guidance information, the pop-up window, the target page or the link of the target page, etc., so that the second terminal is enabled to interact with the first user corresponding to the second terminal in the process of playing the video. This not only improves the flexibility of configuring the video by the second user, but also improves the interactivity between the first user and the video, and improves the user experience.

Fig. 13 is a schematic structural diagram of a video processing apparatus according to an embodiment of the present disclosure. The video processing apparatus provided by the embodiment of the present disclosure can be configured in a client, or in a server, and the video processing apparatus 130 comprises: a player containing a playing module 131 configured to play a video; a controller containing a control module 132 configured to suspend playing the video when the video is played to a preset progress; a display containing a display module 133 configured to display interactive operation guidance information; and a processor containing a detection module 134 configured to detect an interactive operation of a first user within a preset time.

The display module 133 is further configured to: when the detection module 134 detects the interactive operation of the first user within the preset time, display a pop-up window, wherein the pop-up window comprises a target object; and display a target page according to a first operation of the first user on the pop-up window, wherein the target page comprises relevant information of the target object.

Optionally, the control module 132 is further configured to: close the pop-up window according to a second operation of the first user on the pop-up window or a third operation of the first user on an area outside the pop-up window; and the playing module 131 is further configured to continue playing the video after the pop-up window is closed.

Optionally, the playing module 131 is further configured to: when the detection module 134 does not detect the interactive operation of the first user within the preset time, continue playing the video.

Optionally, the display module 133 is specifically configured to: when the detection module 134 detects the interactive operation of the first user inside a preset area within the preset time, display the pop-up window.

Optionally, the playing module 131 is further configured to: when the detection module 134 detects the interactive operation of the first user outside the preset area within the preset time, continue playing the video.

Optionally, the interactive operation comprises: a clicking operation.

Optionally, the interactive operation comprises: a sliding operation.

Optionally, the video processing apparatus 130 further comprises: a determination module 135 configured to, when the detection module 134 detects the sliding operation of the first user within the preset time, determine whether a sliding track of the first user meets a preset condition according to the sliding operation; and the display module 133 is configured to: display the pop-up window in the case where the sliding track meets the preset condition.

Optionally, the preset condition comprise:
a similarity between the sliding track and a preset track shown by the interactive operation guidance information being greater than or equal to a preset similarity.

Optionally, the preset condition comprises at least one of:
a length of the sliding track being greater than or equal to a preset length; and
an angle of the sliding track being within a preset angle range.

Optionally, the angle of the sliding track is an angle between a line connecting a start point and an end point of the sliding track and a horizontal direction or a vertical direction; or
The angle of the sliding track is an angle between a tangent of the start point of the sliding track and the horizontal direction or the vertical direction.

Optionally, the display module 133 is configured to display the sliding track of the first user according to the sliding operation; and the determination module 135 is configured to determine whether the sliding track of the first user meets the preset condition.

Optionally, the video comprises an advertisement video, the target object is an advertisement product, and the target page is used for displaying relevant information of the advertisement product.

The video processing apparatus provided by the embodiments of the present disclosure can perform steps performed by the client or server in the video processing method provided by the embodiments of the present disclosure, and details of the steps and beneficial effects are not repeated here.

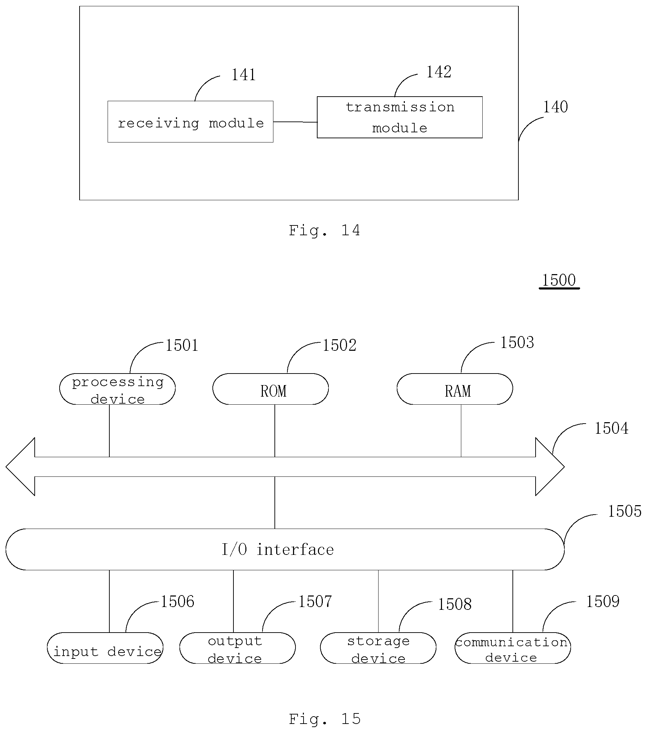

Fig. 14 is a schematic structural diagram of a video processing apparatus according to an embodiment of the present disclosure. The video processing provided by the embodiment of the present disclosure can be configured in a server, and the video processing apparatus 140 comprises: a receiver containing a receiving module 141 configured to receive configuration information transmitted by a first terminal, wherein the configuration information comprises information of configuring a video, a preset progress, interactive operation guidance information, a pop-up window, and a target page by a second user; and a transmitter containing a transmission module 142 configured to transmit the video, the preset progress, the interactive operation guidance information, the pop-up window, and the target page to a second terminal according to the configuration information.

The video processing apparatus provided by the embodiments of the present disclosure can perform the steps performed by the server in the video processing method provided by the embodiments of the present disclosure, and details of the steps and the beneficial effects are not repeated herein.

Fig. 15 is a schematic structural diagram of an electronic device according to an embodiment of the present disclosure. Referring now to Fig. 15, a schematic structural diagram of an electronic device 1500 suitable for implementing the embodiment of the present disclosure is shown.

The electronic device 1500 in the embodiment of the present disclosure can comprise, but is not limited to, a mobile terminal such as a mobile phone, notebook computer, digital broadcast receiver, PDA (personal digital assistant), PAD (tablet computer), PMP (portable multimedia player), in-vehicle terminal (e.g., car navigation terminal), wearable electronic device, as well as a fixed terminals such as a digital TV, desktop computer, smart home device.

The electronic device shown in Fig. 15 is only an example, and should not bring any limitation to the functions and the use scope of the embodiments of the present disclosure. In addition, the electronic device shown in Fig. 15 can also be the server according to the above embodiment, and the server can execute the video processing method according to the above embodiment, so as to implement the interaction with the user.

As shown in Fig. 15, the electronic device 1500 can comprise a processing device (e.g., a central processing unit, a graphics processor, etc.) 1501 that can perform various appropriate actions and processes according to a program stored in a read-only memory (ROM) 1502 or a program loaded from a storage device 1508 into a random access memory (RAM) 1503. In the RAM 1503, various programs and data necessary for the operation of the electronic device 1500 are also stored. The processing device 1501, the ROM 1502, and the RAM 1503 are connected to each other through a bus 1504. An input/output (I/O) interface 1505 is also connected to the bus 1504.

Generally, the following devices can be connected to the I/O interface 1505: an input device 1506 comprising, for example, a touch screen, touch pad, keyboard, mouse, camera, microphone, accelerometer, gyroscope, etc.; an output device 1507 comprising, for example, a Liquid Crystal Display (LCD), speaker, vibrator, etc.; a storage device 1508 comprising, for example, a magnetic tape, hard disk, etc. ; and a communication device 1509. The communications device 1509 can allow the electronic device 1500 to perform wireless or wired communication with other devices to exchange data. While Fig. 15 shows the electronic device 1500 having various apparatuses, it should be understood that all shown apparatuses are not required to be implemented or provided. More or fewer apparatuses can be alternatively implemented or provided.

According to the embodiment of the present disclosure, the process described above with reference to the flowchart can be implemented as a computer software program. For example, the embodiment of the present disclosure comprises a computer program product comprising a computer program carried on a computer-readable medium, wherein the computer program contains program codes for performing the method illustrated by the flowchart, thereby implementing the video processing method as described above. In such an embodiment, the computer program can be downloaded and installed from a network via the communication device 1509, or installed from the storage device 1508, or installed from the ROM 1502. When the computer program is executed by the processing device 1501, the above functions defined in the method of the embodiment of the present disclosure are executed.

It should be noted that the above computer-readable medium of the present disclosure can be a computer-readable signal medium or a computer-readable storage medium or any combination of the two. The above computer-readable storage medium can be a non-volatile computer-readable storage medium. The computer-readable storage medium can be, for example, but not limited to, an electronic, magnetic, optical, electromagnetic, infrared, or semiconductor system, apparatus, or device, or any combination of the above. The computer-readable storage medium can comprise, for example, but is not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, the computer-readable storage medium can be any tangible medium having thereon contained or stored a program, and the program can be used by or in combination with an instruction execution system, apparatus, or device. And in the present disclosure, the computer-readable signal medium can comprise a data signal propagated in baseband or as part of a carrier wave, in which the computer-readable program codes are carried. Such a propagated data signal can take a variety of forms comprising, but not limited to, an electro-magnetic signal, an optical signal, or any suitable combination of the above. The computer-readable signal medium can also be any computer-readable medium except the computer-readable storage medium, and it can send, propagate or transmit the program used by or in combination with the instruction execution system, apparatus, or device. The program code contained on the computer-readable medium can be transmitted by using any appropriate medium, comprising but not limited to: an electrical wire, an optical cable, RF (radio frequency), etc., or any suitable combination of the above.

In some implementations, the client and the server can communicate with each other by using any currently known or future developed network protocol, such as HTTP (HyperText Transfer Protocol), and can be interconnected with digital data communication (e.g., a communication network) of any form or medium. Examples of communication networks comprise a local area network ("LAN"), a wide area network ("WAN"), an internet (e.g., the Internet), and a peer-to-peer network (e.g., an ad hoc peer-to-peer network), as well as any currently known or future developed network.

The above computer-readable medium can be contained in the electronic device; and it can also exist alone, instead of being assembled into the electronic device.

The above computer-readable medium has therein carried one or more programs which, when executed by the electronic device, cause the electronic device to: play a video; in the case where the video is played to a preset progress, suspend playing the video; display interactive operation guidance information; display a pop-up window if an interactive operation of a first user is detected within a preset time, wherein the pop-up window comprises a target object; and display a target page according to a first operation of the first user on the pop-up window, wherein the target page comprises relevant information of the target object.

In addition, the electronic device can also perform other steps described in the above method embodiment.

Alternatively, the above computer-readable medium has therein carried one or more programs which, when executed by the electronic device, cause the electronic device to: receive configuration information transmitted by a first terminal, wherein the configuration information comprises information of configuring a video, a preset progress, interactive operation guidance information, a pop-up window and a target page by a second user; and transmit the video, the preset progress, the interactive operation guidance information, the pop-up window and the target page to a second terminal according to the configuration information.

In addition, the electronic device can also perform other steps described in the above method embodiment.

Computer program codes for performing the operations of the present disclosure can be written in one or more programming languages or a combination thereof, and the programming language comprises but is not limited to an object-oriented programming language such as Java, Smalltalk, C++, as well as a conventional procedural programming language, such as "C" language or a similar programming language. The program codes can be executed entirely on the user's computer, partly on the user's computer, as a stand-alone software package, partly on the user's computer and partly on a remote computer, or entirely on the remote computer or server. In a scenario where the remote computer is involved, the remote computer can be connected to the user's computer through any type of network, comprising a local area network (LAN) or a wide area network (WAN), or to an external computer (for example, through the Internet provided by an Internet service provider).

The flowcharts and block diagrams in the accompanying drawings illustrate the architecture, functions, and operations of possible implementations of the system, method and computer program product according to various embodiments of the present disclosure. In this regard, each block in the flowchart or block diagram can represent one module, program segment, or portion of the codes, which contains one or more executable instructions for implementing a specified logical function. It should also be noted that, in some alternative implementations, the functions marked in the blocks can be generated in a different order than the one marked in the accompanying drawing. For example, two blocks shown in succession can, in fact, be executed substantially in parallel, or sometimes in a reverse order, which depends upon involved functions. It will also be noted that each block of the block diagram and/or flowchart, and a combination thereof, can be implemented by a special-purpose hardware-based system performing specified functions or operations, or by a combination of special-purpose hardware and computer instructions.

The units described in the embodiments of the present disclosure can be implemented by means of software or hardware. The name of the unit herein does not cause a limitation on the unit itself in some cases.

The above functions described herein can be at least partially performed by one or more hardware logic components. For example, without limitation, exemplary types of hardware logic components that can be used comprise: a field Programmable Gate Array (FPGA), an Application Specific Integrated Circuit (ASIC), an Application Specific Standard Product (ASSP), a system on a chip (SOC), a Complex Programmable Logic Device (CPLD), etc.

In the context of this disclosure, a machine-readable medium can be a tangible medium having thereon contained or stored a program used by or in combination with the instruction execution system, apparatus, or device. The machine-readable medium can be a machine-readable signal medium or a machine-readable storage medium. The machine-readable medium can comprise, but is not limited to, an electronic, magnetic, optical, electromagnetic, infrared, or semiconductor system, apparatus, or device, or any suitable combination of the above. The machine-readable storage medium comprises, for example, an electrical connection based on one or more wires, a portable computer diskette, a hard disk, a random access memory (RAM), a read-only memory (ROM), an erasable programmable read-only memory (EPROM or flash memory), an optical fiber, a compact disc read-only memory (CD-ROM), an optical storage device, a magnetic storage device, or any suitable combination of the above.

According to one or more embodiments of the present disclosure, there is provided a video processing method comprising: playing a video; suspending playing the video in the case where the video is played to a preset progress; displaying interactive operation guidance information; displaying a pop-up window if an interactive operation of a first user is detected within a preset time, wherein the pop-up window comprises a target object; and displaying a target page according to a first operation of the first user on the pop-up window, wherein the target page comprises relevant information of the target object.

According to one or more embodiments of the present disclosure, in the video processing method provided by the present disclosure, the method further comprises: closing the pop-up window according to a second operation of the first user on the pop-up window or a third operation of the first user on an area outside the pop-up window; and continuing playing the video.

According to one or more embodiments of the present disclosure, in the video processing method provided by the present disclosure, the method further comprises: continuing playing the video if the interactive operation of the first user is not detected within the preset time.

According to one or more embodiments of the present disclosure, in the video processing method provided by the present disclosure, the displaying a pop-up window if an interactive operation of a first user is detected within a preset time comprises: displaying the pop-up window if the interactive operation of the first user inside a preset area is detected within the preset time.

According to one or more embodiments of the present disclosure, in the video processing method provided by the present disclosure, the method further comprises: continuing playing the video if the interactive operation of the first user outside the preset area is detected within the preset time.

According to one or more embodiments of the present disclosure, in the video processing method provided by the present disclosure, the interactive operation comprises: a clicking operation.

According to one or more embodiments of the present disclosure, in the video processing method provided by the present disclosure, the interactive operation comprises: a sliding operation.

According to one or more embodiments of the present disclosure, in the video processing method provided by the present disclosure, the displaying a pop-up window if an interactive operation of a first user is detected within a preset time comprises: if a sliding operation of the first user is detected within the preset time, determining whether a sliding track of the first user meets a preset condition according to the sliding operation; and in the case where the sliding track meets the preset condition, displaying the pop-up window.

According to one or more embodiments of the present disclosure, in the video processing method provided by the present disclosure, the preset condition comprises: a similarity between the sliding track and a preset track shown by the interactive operation guidance information being greater than or equal to a preset similarity.

According to one or more embodiments of the present disclosure, in the video processing method provided by the present disclosure, the preset condition comprises at least one of: a length of the sliding track being greater than or equal to a preset length; and an angle of the sliding track being within a preset angle range.

According to one or more embodiments of the present disclosure, in the video processing method provided by the present disclosure, the angle of the sliding track is an angle between a line connecting a start point and an end point of the sliding track and a horizontal direction or a vertical direction; or the angle of the sliding track is an angle between a tangent of the start point of the sliding track and the horizontal direction or the vertical direction.

According to one or more embodiments of the present disclosure, in the video processing method provided by the present disclosure, the determining whether a sliding track of the first user meets a preset condition according to the sliding operation comprises: displaying the sliding track of the first user according to the sliding operation; and determining whether the sliding track of the first user meets the preset condition.

According to one or more embodiments of the present disclosure, in the video processing method provided by the present disclosure, the video comprises an advertisement video, the target object is an advertisement product, and the target page is used for displaying relevant information of the advertisement product.

According to one or more embodiments of the present disclosure, there is provided a video processing method comprising: receiving configuration information transmitted by a first terminal, wherein the configuration information comprises information of configuring a video, a preset progress, interactive operation guidance information, a pop-up window and a target page by a second user; and transmitting the video, the preset progress, the interactive operation guidance information, the pop-up window and the target page to a second terminal according to the configuration information.

According to one or more embodiments of the present disclosure, there is provided a video processing apparatus comprising: a player containing a playing module configured to playing a video; a controller containing a control module configured to suspend playing the video in the case where the video is played to a preset progress; a display containing a display module configured to display interactive operation guidance information; and a processor containing a detection module configured to detect an interactive operation of a first user within a preset time; the display module being further configured to: display a pop-up window when the detection module detects the interactive operation of the first user within the preset time, wherein the pop-up window comprises a target object; and display a target page according to a first operation of the first user on the pop-up window, wherein the target page comprises relevant information of the target object.

According to one or more embodiments of the present disclosure, in the video processing apparatus provided by the present disclosure, the control module is further configured to: close the pop-up window according to a second operation of the first user on the pop-up window or a third operation of the first user on an area outside the pop-up window; and the playing module is further configured to continue playing the video after the pop-up window is closed.

According to one or more embodiments of the present disclosure, in the video processing apparatus provided by the present disclosure, the playing module is further configured to: when the detection module does not detect the interactive operation of the first user within the preset time, continue playing the video.

According to one or more embodiments of the present disclosure, in the video processing apparatus provided by the present disclosure, the display module is configured to: when the detection module detects the interactive operation of the first user inside the preset area within the preset time, display the pop-up window.

According to one or more embodiments of the present disclosure, in the video processing apparatus provided by the present disclosure, the playing module is further configured to: when the detection module detects the interactive operation of the first user outside the preset area within the preset time, continue playing the video.

According to one or more embodiments of the present disclosure, in the video processing apparatus provided by the present disclosure, the interactive operation comprises: a clicking operation.

According to one or more embodiments of the present disclosure, in the video processing apparatus provided by the present disclosure, the interactive operation comprises: a sliding operation.

According to one or more embodiments of the present disclosure, in the video processing apparatus provided by the present disclosure, the video processing apparatus further comprises: a determination module configured to determine whether a sliding track of the first user meets a preset condition according to the sliding operation when the sliding operation of the first user is detected within the preset time by the detection module; and the display module is configured to: display the pop-up window in the case where the sliding track meets the preset condition.

According to one or more embodiments of the present disclosure, in the video processing apparatus provided by the present disclosure, the preset condition comprises: a similarity between the sliding track and a preset track shown by the interactive operation guidance information being greater than or equal to a preset similarity.

According to one or more embodiments of the present disclosure, in the video processing apparatus provided by the present disclosure, the preset condition comprises at least one of: a length of the sliding track being greater than or equal to a preset length; and an angle of the sliding track being within a preset angle range.

According to one or more embodiments of the present disclosure, in the video processing apparatus provided by the present disclosure, the angle of the sliding track is an angle between a line connecting a start point and an end point of the sliding track and a horizontal direction or a vertical direction; or the angle of the sliding track is an angle between a tangent of the start point of the sliding track and the horizontal direction or the vertical direction.

According to one or more embodiments of the present disclosure, in the video processing apparatus provided by the present disclosure, the display module is configured to display the sliding track of the first user according to the sliding operation; and the determination module is configured to determine whether the sliding track of the first user meets the preset condition.

According to one or more embodiments of the present disclosure, in the video processing apparatus provided by the present disclosure, the video comprises an advertisement video, the target object is an advertisement product, and the target page is used for displaying relevant information of the advertisement product.

According to one or more embodiments of the present disclosure, there is provided a video processing apparatus comprising: a receiver containing a receiving module configured to receive configuration information transmitted by a first terminal, wherein the configuration information comprises information of configuring a video, a preset progress, interactive operation guidance information, a pop-up window and a target page by a second user; and a transmitter containing a transmitting module configured to transmit the video, the preset progress, the interactive operation guidance information, the pop-up window and the target page to a second terminal according to the configuration information.

According to one or more embodiments of the present disclosure, there is provided an electronic device comprising: one or more processors; and a memory configured to store one or more programs; the one or more programs, when executed by the one or more processors, causing the one or more processors to implement any of the video processing methods provided by the present disclosure.

According to one or more embodiments of the present disclosure, there is provided a computer-readable storage medium having thereon stored a computer program which when executed by a processor, implements any of the video processing methods provided by the present disclosure.

The above description is only illustrative of the preferred embodiments of the present disclosure and the principles of the technology employed. It will be appreciated by those skilled in the art that the scope involved in the present disclosure is not limited to the technical solution formed by the specific combination of the above features, and should also cover another technical solution formed by any combination of the above technical features or their equivalents without departing from the above disclosed concept. For example, the above features and the technical features disclosed in (but not limited to) the present disclosure having similar functions are replaced with each other to form the technical solution.

Furthermore, while operations are described in a specific order, this should not be understood as requiring that these operations be performed in the specific order shown or in a sequential order. Under certain circumstances, multitasking and parallel processing may be advantageous. Similarly, while details of several specific implementations are comprised in the above discussion, they should not be construed as limitations to the scope of the present disclosure. Certain features described in the context of individual embodiments can also be implemented in combination in a single embodiment. Conversely, various features described in the context of the single embodiment can also be implemented in a plurality of embodiments individually or in any suitable sub-combination.

Although the subject matter has been described in language specific to structural features and/or logical actions of methods, it is to be understood that the subject matter defined in the attached claims is not necessarily limited to the specific features or actions described above. Rather, the specific features and actions described above are disclosed as only examples of implementing the claims.

## Claims

1. A video processing method comprising:
playing a video;
suspending playing the video in a case where the video is played to a preset progress;
displaying interactive operation guidance information;
displaying a pop-up window if a first user' s interactive operation corresponding to the interactive operation guidance information is detected within a preset time, the pop-up window comprising a target object; and
displaying a target page according to a first operation of the first user on the pop-up window, wherein the target page comprises relevant information of the target object.

2. The video processing method according to claim 1, further comprising:
closing the pop-up window according to a second operation of the first user on the pop-up window or a third operation of the first user on an area outside the pop-up window; and
continuing playing the video.

3. The video processing method according to claim 1 or 2, further comprising:
continuing playing the video if the interactive operation of the first user is not detected within the preset time.

4. The video processing method according to any of claims 1 to 3, wherein the displaying a pop-up window if a first user' s interactive operation corresponding to the interactive operation guidance information is detected within a preset time comprises:
displaying the pop-up window if the interactive operation of the first user inside a preset area is detected within the preset time.

5. The video processing method according to claim 4, further comprising:
continuing playing the video if the interactive operation of the first user outside the preset area is detected within the preset time.

6. The video processing method according to any of claims 1 to 5, wherein the interactive operation comprises a clicking operation.

7. The video processing method according to any of claims 1 to 5, wherein the interactive operation comprises a sliding operation.

8. The video processing method according to claim 7, wherein the displaying a pop-up window if a first user's interactive operation corresponding to the interactive operation guidance information is detected within a preset time comprises:
if a sliding operation of the first user is detected within the preset time, determining whether the sliding track of the first user meets a preset condition according to the sliding operation; and
displaying the pop-up window, in a case where the sliding track meets the preset condition.

9. The video processing method according to claims 8, wherein
the preset condition comprises a similarity between the sliding track and a preset track shown by the interactive operation guidance information being greater than or equal to a preset similarity

10. The video processing method according to claim 8, wherein the preset condition comprises at least one of:
a length of the sliding track being greater than or equal to a preset length; or
an angle of the sliding track being within a preset angle range.

11. The video processing method according to claim 10, wherein:
the angle of the sliding track is an angle between a line connecting a start point and an end point of the sliding track and a horizontal direction or a vertical direction; or
the angle of the sliding track is an angle between a tangent at the start point of the sliding track and the horizontal direction or the vertical direction.

12. The video processing method according to any of claims 1 to 11, wherein the video comprises an advertisement video, the target object is an advertisement product, and the target page is used for displaying relevant information of the advertisement product.

13. The video processing method according to any of claims 1 to 11, wherein the interactive operation guidance information comprises a dynamic icon, a static icon, or text information, for guiding the first user to perform the interactive operation.

14. A video processing method comprising:
receiving configuration information transmitted by a first terminal, wherein the configuration information comprises information of configuring a video, a preset progress, interactive operation guidance information, a pop-up window and a target page by a second user; and
transmitting the video, the preset progress, the interactive operation guidance information, the pop-up window and the target page to a second terminal according to the configuration information.

15. The video processing method according to claim 14, wherein the video, the preset progress, the interactive operation guidance information, the pop-up window and the target page are used for the second terminal to perform the video processing method according to any of claims 1 to 13.

16. A video processing apparatus comprising:
a player configured to play a video;
a controller configured to suspend playing the video in a case where the video is played to a preset progress;
a display configured to display interactive operation guidance information; and
a processor configured to detect whether a first user performs an interactive operation corresponding to the interactive operation guidance information within a preset time,
the display being further configured to display a pop-up window when the processor detects the first user's interactive operation corresponding to the interactive operation guidance information within the preset time, wherein the pop-up window comprises a target object, and display a target page according to a first operation of the first user on the pop-up window, wherein the target page comprises relevant information of the target object.

17. A video processing apparatus comprising:
a receiver configured to receive configuration information transmitted by a first terminal, wherein the configuration information comprises information of configuring a video, a preset progress, interactive operation guidance information, a pop-up window and a target page by a second user; and
a transmitter configured to transmit the video, the preset progress, the interactive operation guidance information, the pop-up window and the target page to a second terminal according to the configuration information.

18. The video processing apparatus according to claim 17, wherein the video, the preset progress, the interactive operation guidance information, the pop-up window and the target page are used for the second terminal to perform the video processing method according to any of claims 1 to 13.

19. An electronic device comprising:
one or more processors; and
a memory configured to store one or more programs;
the one or more programs, when executed by the one or more processors, causing the one or more processors to implement the video processing method according to any of claims 1 to 15.

20. A computer-readable storage medium having thereon stored a computer program which when executed by a processor, implements the video processing method according to any of claims 1 to 15.

21. A computer program comprising:
instructions which when executed by a processor, cause the processor to execute the video processing method according to any of claims 1 to 15.

22. A computer program product comprising instructions which when executed by a processor, cause the processor to execute the video processing method according to any of claims 1 to 15.
